# EUROPEAN PATENT SPECIFICATION

(11) **EP 1 914 450 B1**
(45) Date of publication and mention of the grant of the patent: **14.07.2010**
(21) Application number: 07115505.5
(22) Date of filing: 03.09.2007
(51) Int. Cl.: F16H 55/56, F16H 9/18

(54) **Drive pulley in V-belt automatic transmission device**
Antriebsscheibe eines automatischen Keilriemengetriebes
Poulie d'entraînement dans un dispositif de transmission automatique

(30) Priority: 16.10.2006 JP 2006282062; 19.02.2007 JP 2007038662
(43) Date of publication of application: 23.04.2008
(73) Proprietor: Yamada Manufacturing Co., Ltd., Kiryu-shi, Gunma-ken (JP)
(72) Inventor: Kawashima, Yoshinori, Isesaki-shi Gunma-ken (JP)
(74) Representative: Skone James, Robert Edmund

(56) References cited:
- GB-A- 2 177 169
- JP-A- 56 035 853
- JP-A- 59 197 653

## Description

The present invention relates to a drive pulley in a V-belt automatic transmission device, in which slippage between the drive pulley and the V-belt is prevented, and the V-belt follows the drive pulley very well, when the motorcycle suddenly starts, suddenly increases speed, or suddenly accelerates.

Japanese Patent Application Laid-open No. S56-35853 discloses an automatic transmission device in a motorcycle, in which the drive pulley, which is rotated by the engine output shaft (drive shaft), is constituted by a combination of a fixed pulley and a movable pulley. The movable pulley of the drive pulley is moved along the axial direction of the drive shaft towards the fixed pulley by fly weights. In Japanese Patent Application Laid-open No. S56-35853 the driven pulley is provided with a cam mechanism as well as fly weights as conventional art.

In Japanese Patent Application Laid-open No. S56-35853, the cam mechanism moves the movable pulley only with respect to the fixed pulley. The movable pulley only is pressed in the axial direction. Due to the resultant force of the cam force of the cam mechanism and the pressing force of the fly weights, and so on, the belt transmission power is transmitted from the drive pulley to the driven pulley while the interval between the fixed pulley and the movable pulley is modified as appropriate. Also, when the belt transmission power is transmitted to the driven pulley, a belt transmission friction force is generated between the drive pulley and the belt.

In a V-belt automatic transmission device, when a sudden rotational acceleration is applied, for example such as when the accelerator is suddenly opened when suddenly starting or suddenly increasing speed, in response to the instantaneous excessive rotational power (sudden excessive torque), slippage can occur between the V-belt and the fixed pulley and movable pulley that hold the V-belt. This is because when a sudden rotational acceleration is applied, the holding force of the fixed pulley and the movable pulley on the V-belt is too small, and therefore slippage occurs. As the rotation speed of the drive shaft increases, fly weights act on the movable pulley, and the movable pulley is moved towards the fixed pulley. However, when a sudden rotational acceleration is applied, the fly weights cannot respond instantaneously, and as a result the movable pulley cannot start to move towards the fixed pulley when suddenly starting or when suddenly increasing speed.

As a result, when a sudden rotational acceleration is applied to the drive shaft it is difficult to smoothly and efficiently transmit the rotational power to the driven shaft by the V-belt, and the torque on the driven pulley follows the torque on the drive pulley with a delay. Furthermore, when slippage occurs between the V-belt and the movable pulley and fixed pulley that hold the V-belt, noise is generated between the V-belt and the pulley face by the rubbing, or smells are generated by the frictional heating, and the life of the V-belt is greatly reduced.

Therefore the problem that the present invention solves (technical task or object) is to improve the efficiency of V-belt transmission when transmitting excessive rotational power during a sudden acceleration, so that slippage does not occur between the pulley and the V-belt, power is stably, smoothly, and efficiently transmitted to the driven pulley, and the belt transmission friction force between the pulley and the belt is in an optimum state.

JP-A-59197653 discloses a drive pulley in a V-belt automatic transmission according to the preamble of claim 1.

In accordance with the present invention, the drive pulley in a V-belt automatic transmission device comprises:
a drive shaft;
a movable half pulley that rotates together with the drive shaft and moves in the axial direction;
a base half pulley that is in opposition to the movable half pulley and that has movable cams formed in the surface of a pulley face facing away from the movable half pulley and around a hole portion of the base half pulley; and
a boss member which is fixed to the drive shaft, and which includes a boss shaft portion which slidably supports the base half pulley, and fixed cams formed around the boss shaft portion, wherein
when a sudden rotational acceleration is applied to the drive shaft, the fixed cams contact the movable cams, and the movable cams move away from the fixed cams in the axial direction, and is **characterized in that** the hole portion is a boss hole portion, and in that the boss shaft portion is inserted into the boss hole portion.

Thus when a sudden rotational acceleration is applied to the drive shaft in the drive pulley, such as when excessive rotational power is applied when the accelerator is suddenly pressed or the like, the fixed cams contact the movable cams, and the movable cams move away from the fixed cams in the axial direction. Therefore, the base half pulley together with the movable cams can move along the drive shaft direction. In this way, when suddenly starting or suddenly accelerating, the base half pulley can instantaneously respond, and move towards the movable half pulley. This instantaneously narrows the pulley width, so the V-belt is contacted at both ends in the width direction by a pressing force, so it is possible to prevent slippage between the V-belt and the pulley. Also, it is possible to stabilize the power transmission from the drive pulley to the driven pulley, so smooth and efficient transmission is possible. Further, the belt transmission friction force between the pulley and the V-belt is optimized, so it is possible to obtain high efficiency V-belt transmission, and it is possible to generate a lateral load that is appropriate to the engine torque.

Preferably, the movable cams and the fixed cams can be brought into contact, but under normal conditions the movable cams and the fixed cams are elastically separated, and cam surfaces are formed at the positions of contact of the movable cams and the fixed cams such that the movable cams move away from the fixed cams in the axial direction of the drive shaft accompanied by a movement of the fixed cams in the direction of rotation of the drive shaft.

In this case, when starting at low speed, the base half pulley cannot move in the axial direction, so normal starting can be smoothly carried out. Also, at least one of the contact positions of the fixed cams has a cam surface such that the movable cams move away from the fixed cams in the axial direction of the drive shaft together with a movement of the fixed cams in the direction of rotation of the drive shaft. Therefore, only when suddenly starting or when suddenly accelerating do the fixed cams and the movable cams come into contact, and the base half pulley moves in the axial direction. When suddenly starting or suddenly accelerating, the base half pulley can instantaneously respond, and move towards the movable half pulley. This instantaneously narrows the pulley width, so the V-belt is contacted at both ends in the width direction by a pressing force, so it is possible to prevent slippage between the V-belt and the pulley.

Preferably, the contact portions of the movable cams and the fixed cams are slanting surfaces in plane contact.

When the movable cams and the fixed cams contact each other on the slanting surfaces, the movable cams can move on the slanting surface of the fixed cams in a stable manner. Therefore the movement of the base half pulley towards the movable half pulley is extremely smooth.

Compression coil springs may be fitted as elastic members between the two contact portions of the movable cams and the fixed cams, depression portions are formed in the movable cams and the fixed cams from the two contact portions towards the interior thereof, and the two end portions in the longitudinal direction of the compression coil springs are housed in the depression portions.

Therefore it is possible to provide compression coil springs with suitable total length in the limited space of the movable cams and the fixed cams. Also, it is possible to stably fit the compression coil springs between the movable cams and the fixed cams. Also, using the compression coil springs it is possible to easily elastically separate the movable cams and the fixed cams. In addition, it is possible to bring the two slanting surfaces that are the contact portions of the movable cams and the fixed cams into close contact, so it is possible for the movable cams to move stably on the slanting surface of the fixed cams.

Regulating projections may be formed at appropriate intervals on the side of the contact portions of the fixed cams of the boss member.

The regulating projections prevent the movable cams from being allowed by the elastic member to separate too far from the fixed cams. Therefore, apart from times when a sudden rotational acceleration is applied to the drive shaft, it is possible to maintain the movable cams in a stable condition under normal conditions.

In some cases, a plurality of the movable cams are formed at equal intervals along the circumferential direction around the periphery of the boss hole portion, and the number of fixed cams is the same as the number of movable cams, and the fixed cams are formed at the same intervals as the movable cams.

Therefore, when a sudden rotational acceleration is applied to the drive shaft, the plurality of movable cams and the same number of fixed cams contact, so the sudden shock is distributed among a plurality of movable and fixed cams. Therefore, it is possible to improve the durability of the movable cams and the fixed cams.

Some examples of drive pulleys according to the invention will now be described with reference to the accompanying drawings, in which:-
Fig. 1A is a sectioned side view through a first embodiment of the present invention, Fig. 1B is a view at section Xa-Xa in Fig. 1A in the direction of the arrows;
Fig. 2A is an isometric view of the base half pulley, Fig. 2B is a front view of Fig. 2A;
Fig. 3A is an isometric view of the boss member, Fig. 3B is a rear surface view of the boss member, Fig. 3C is a sectioned side view through the boss member;
Fig. 4A is a front view of the base half pulley connected to the boss member, Fig. 4B is an exploded side view of the main parts of the base half pulley and the boss member, Fig. 4C is a side view of the base half pulley and the boss member in the connected state;

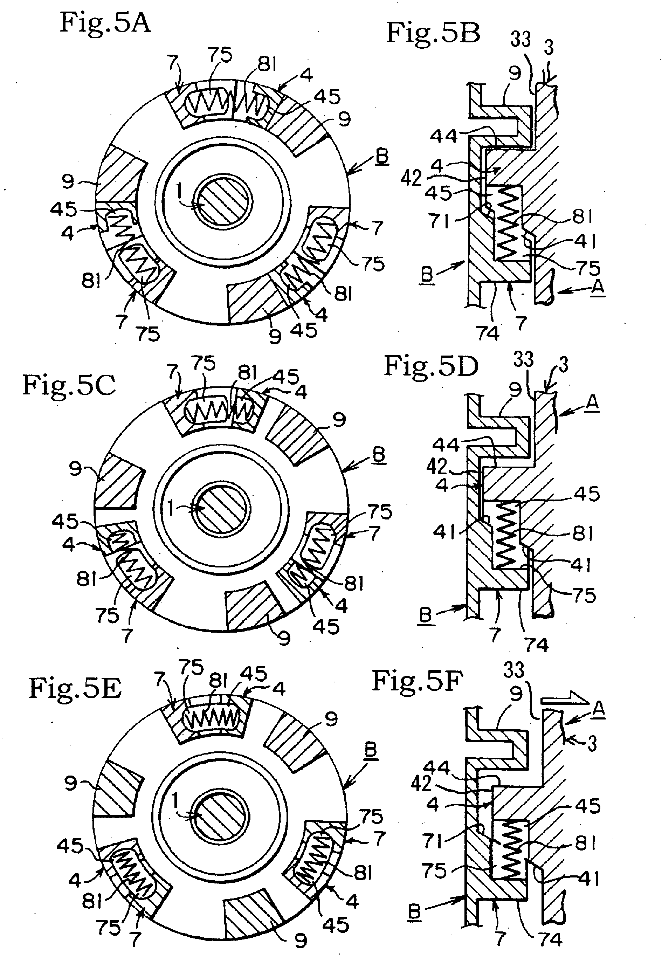

Fig. 5A is a diagram showing the movable cams of the base half pulley and the fixed cams of the boss member in the separated state, Fig. 5B is a sectioned side view through the movable cam and fixed cam in Fig. 5A, Fig. 5C is a diagram showing the movable cams of the base half pulley and the fixed cams of the boss member in the contacting state, Fig. 5D is a sectioned side view through the movable cam and fixed cam in Fig. 5C, Fig. 5E is a diagram showing the movable cams of the base half pulley and the fixed cams of the boss member contacting but slightly separated in the axial direction, Fig. 5F is a sectioned side view through the movable cam and fixed cam in Fig. 5E;
Fig. 6A is a side view of the main part of the movable cam of the base half pulley and the fixed cam of the boss member separated in the circumferential direction of the shaft, Fig. 6B is a side view of the main part of the movable cam of the base half pulley slightly separated in the axial direction from the fixed cam of the boss member, Fig. 6C is a diagram showing the base half pulley moved a small amount (a slight movement) towards the movable half pulley;
Fig. 7A is a partially sectioned enlarged view of the main part of another embodiment of the present invention with a tensile coil spring as the elastic member, Fig. 7B is a sectioned side view of the main part of Fig. 7A;
Fig. 8 is a sectioned side view of an automatic transmission device that combines the present invention with a driven pulley;
Fig. 9 is a sectioned side view of an automatic transmission device that combines the present invention with a driven pulley, showing the structure by which the non-fixed half pulley responds to sudden rotational acceleration;
Fig. 10 is a sectioned side view through an automatic transmission with an embodiment in which the movable half pulley is controlled by a motor;
Fig. 11A is an enlarged section through the drive pulley in Fig. 10 showing the base half pulley and the movable half pulley in the separated state, Fig. 11B is an enlarged section through the drive pulley in Fig. 10 showing the base half pulley and the movable half pulley in the close up state;
Fig. 12 is a schematic diagram showing operation control of the motor carried out by the central processing unit (CPU) and the operation command unit (ECU) in an automatic transmission device; and
Fig. 13A is a schematic diagram showing operation control of the motor carried out from the ABS (anti-skid or anti-lock brakes) via the central processing unit (CPU) and the operation command unit (ECU), Fig. 13B is a schematic diagram showing an embodiment in which operation of the motor is controlled by information on change in engine rotation (signal) and amount of throttle (signal) when there is no ABS.

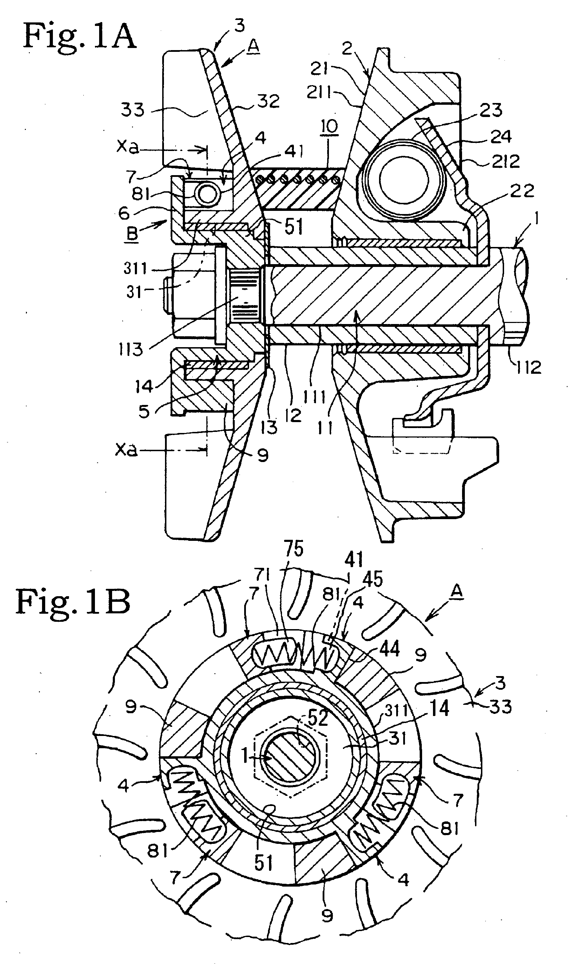

The following is an explanation of the embodiments of the present invention based on the drawings. As shown in Fig. 1A, the present invention includes mainly a drive shaft 1, a movable half pulley 2, a base half pulley A, and a boss member B. The drive shaft 1 is the engine output shaft. The movable half pulley 2 includes a plurality of weight rollers 23 and a roller support plate 24 as constituent members. The movable half pulley 2 includes a movable pulley face 21 and a movable boss portion 22.

In the movable pulley face 21, a flat conical shaped surface portion is the front surface 211, and the surface to the rear of the front surface 211 is the rear surface 212. A plurality of weight rollers 23 is disposed in the rear surface 212, and the weight rollers 23 are supported by the roller support plate 24 (see Fig. 1A). The roller support plate 24 is fitted to the drive shaft 1 so that the roller support plate 24 cannot move in the axial direction. When the drive shaft 1 rotates, the weight rollers 23 move from the movable boss portion 22 of the movable pulley face 21 towards the outer periphery due to centrifugal force, and the movable half pulley 2 is moved towards the base half pulley A, which is described later.

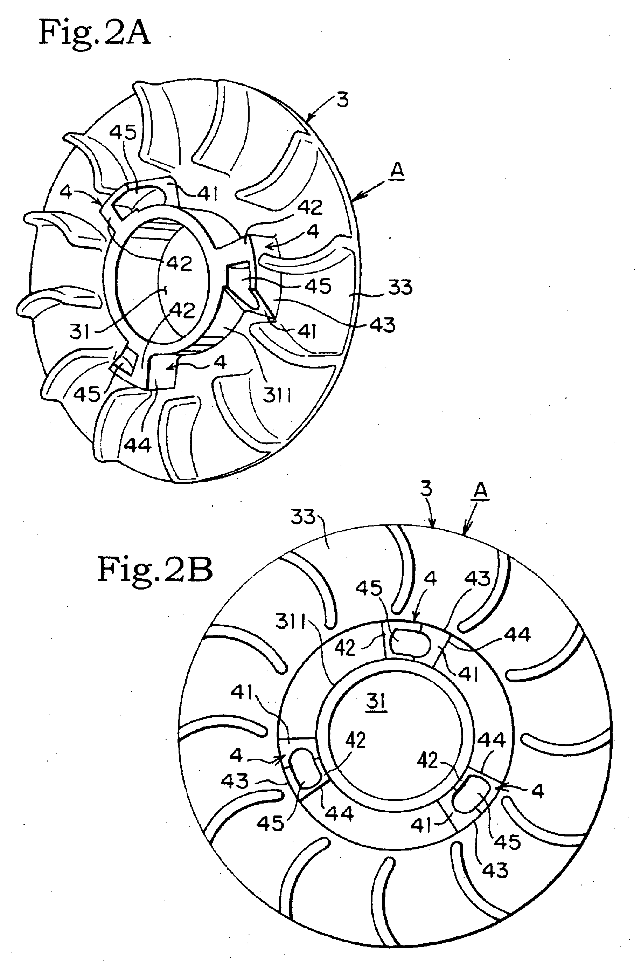

As shown in Fig. 2, the base half pulley A includes a base pulley face 3 and a plurality of movable cams 4. A boss hole portion 31 is formed in the center of the base pulley face 3. A boss shaft portion 5 of the boss member B, which is described later, is inserted into the boss hole portion 31. Also, the base pulley face 3 has a front surface 32 and a rear surface 33. The front surface 32 and the rear surface 33 form a front and rear relationship. The plurality of movable cams 4 is formed integrally on the rear surface 33 and around the periphery of the boss hole portion 31. Specifically, three movable cams 4 are formed at equal intervals.

Furthermore, between adjacent movable cams 4, 4, fixed cams 7 and regulating projections 9 are formed and disposed in the boss member B (see Fig. 1B) . The part of the movable cams 4 that contact the fixed cams 7 of the boss member B is referred to as the contact portion 41. Also, the top portion 42 of the movable cams 4 is formed in a flat shape. Also, the external peripheral portion 43 of the movable cams 4 is formed in a circular arc shape. The inner peripheral side is formed integrally with a base boss portion 311 around the periphery of the boss hole portion 31. Further, the trailing surface 44 is formed in a plane surface shape. Also, a depression portion 45 is formed across the contact portion 41 and the top portion 42. The depression portion 45 is an open depression or dent in the contact portion 41 and the top portion 42, that houses one end in the longitudinal direction of a compression coil spring 81, which is described later.

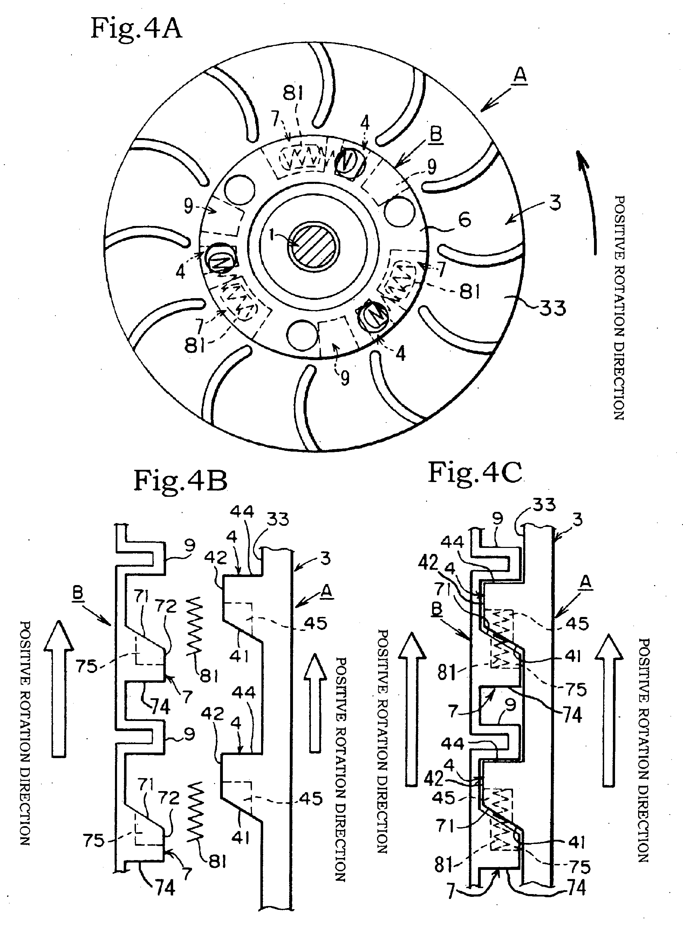

The contact portion 41 is formed as a slanting surface that performs the role of cam surface. The direction of the slant of the slanting surface of the contact portion 41 is such that the top portion 42 is further advanced along the positive direction of rotation of the movable cams 4 than the base of the contact portion 41. More specifically, as shown in Figs. 4B and 4C, the direction of slanting of the contact portion 41 is formed as a surface slanting upwards to the left, in contrast to the contact portion 71 of the fixed cams 7 which slants downwards to the right in the positive rotation direction of the boss member B. Here, positive rotation direction indicates the direction of rotation of the drive shaft 1, the base half pulley A and the boss member B when moving forward (see Fig. 4).

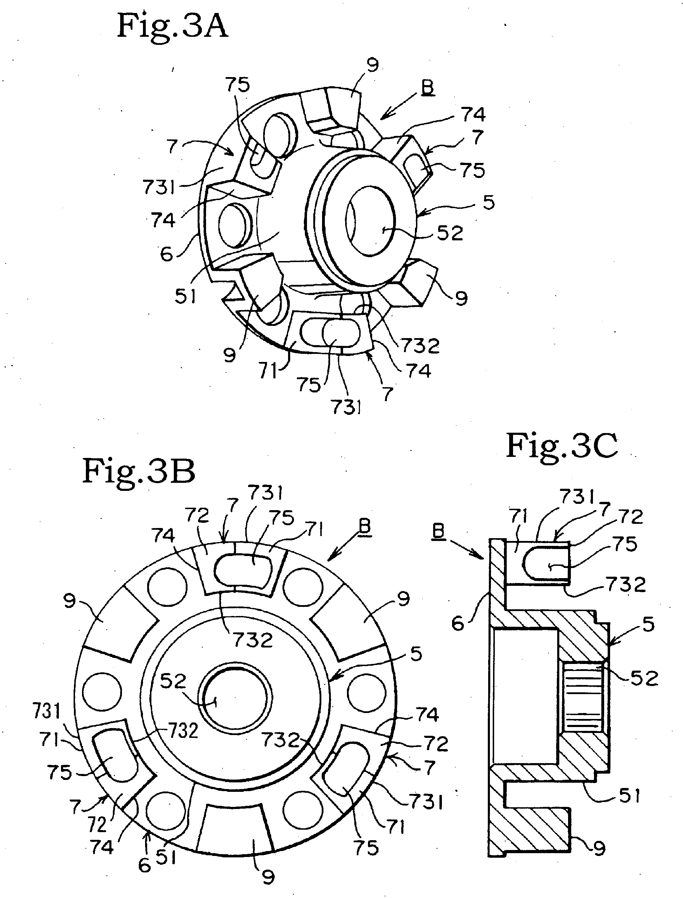

Next, the boss member B includes the boss shaft portion 5, a rim shaped portion 6, and the fixed cams 7, as shown in Fig. 3. The boss shaft portion 5, which is described later, includes a shaft portion 51 formed in an approximately cylindrical shape, in the center of which a fixing hole 52 having latching grooves is formed. Specifically the latching grooves in the fixing hole 52 are splines, to which the end of the drive shaft 1 is fastened using a fastener such as a nut. The rim shaped portion 6 is formed in a circular plate shape, and a plurality of fixed cams 7 is formed on the rim shaped portion 6 around the shaft portion 51. The part of the fixed cams 7 that contacts the contact portion 41 of the movable cams 4 is referred to as the contact portion 71. Also, the top portion 72 of the fixed cams 7 is formed in a flat shape. Also, the outer periphery 731 and the inner periphery 732 of the fixed cams 7 is formed in a circular arc shape.

Furthermore, the trailing surface 74 is formed in a flat plane shape. Also, depression portions 75 are formed across the contact portions 71 and the top portions 72. The depression portions 75 are open depressions or dents in the contact portions 71 and the top portions 72, that houses one end in the longitudinal direction of a compression coil spring 81, which is described later. The contact portions 71 are formed with a slanting surface. The contact portions 71 are formed as slanting surfaces that perform the role of cam surface. The direction of the slant of the slanting surface of the contact portion 71 is such that the top portion 72 is further behind along the positive direction of rotation of the boss member B than the base of the contact portion 71. More specifically, as shown in Figs. 4B and 4C, the direction of slanting of the contact portion 71 is formed as a surface slanting downwards to the right, in contrast to the contact portion 41 of the movable cams 4 which is slanting upwards to the left in the positive rotation direction of the base half pulley A. Here, the positive rotation direction is as explained previously (see Fig. 4).

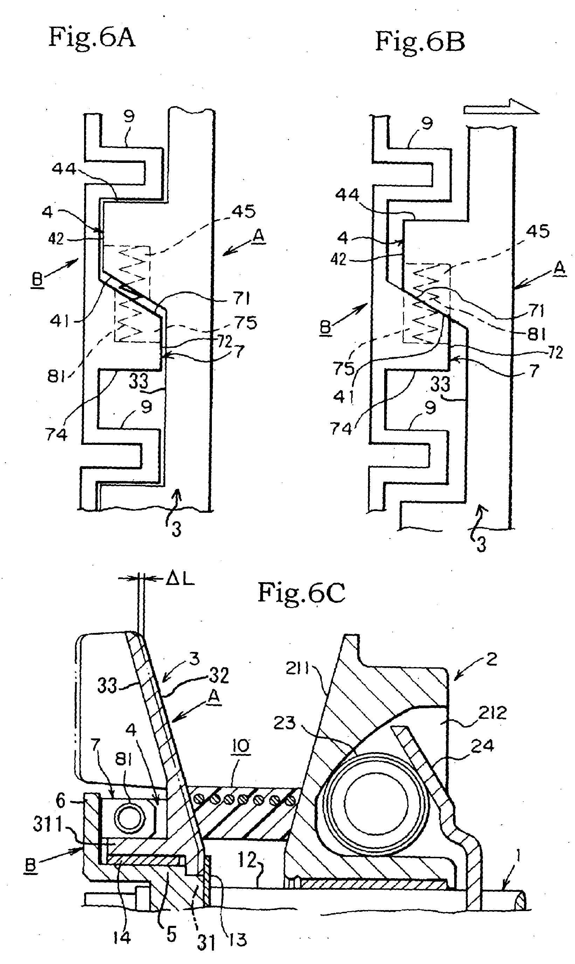

Next, the configuration of the drive pulley according to the present invention is explained. First, as shown in Fig. 1, a cylindrical shaped collar member 12 is fitted to the main shaft portion 111 of the shaft body 11 of the drive shaft 1. The roller support plate 24 is sandwiched and fixed between the shaft end portion of the cylindrical shaped collar member 12 and a step portion in the large diameter shaft portion 112. The movable half pulley 2 is fitted to the cylindrical shaped collar member 12 so that the movable half pulley 2 can freely slide, with the plurality of weight rollers 23 disposed in predetermined locations. Next, the shaft portion 51 of the boss member B is inserted into the boss hole portion 31 of the base half pulley A. The base half pulley A can freely slide over a small range in the axial direction with respect to the shaft portion 51 of the boss member B. Also, a bearing 14 is provided between the boss hole portion 31 of the base half pulley A and the shaft portion 51 of the boss member B (see Figs. 1A and 6C).

Then the contact portions 41 of the movable cams 4 and the contact portions 71 of the fixed cams 7 are disposed in opposition to each other. The two ends in the longitudinal direction of the compression coil springs 81 are housed in the depression portions 45 and the depression portions 75. In this way, the movable cams 4 and the fixed cams 7 are elastically separated from each other (see Figs. 1B and 4C). Then, the fixing hole 52 formed in the shaft portion 51 of the boss member B is fixed to a latching portion 113, such as shaft splines or the like, formed near the shaft end portion of the drive shaft 1. The boss member B is fixed to the drive shaft 1 using a nut or similar fastener fastened to a threaded shaft portion at the end of the drive shaft 1.

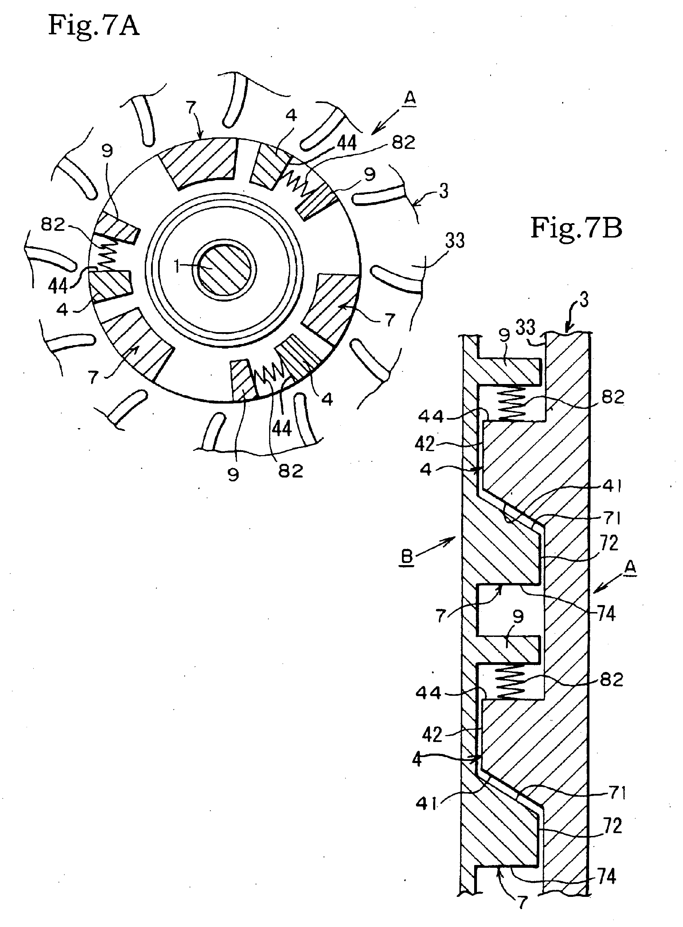

Also, as shown in Figs. 1A and 6C, a washer 13 is fitted between the end portion of the shaft portion 51 of the boss member B and an end in the axial direction of the cylindrical shaped collar member 12. The washer 13 has the role of regulating the range of movement of the base half pulley A in the axial direction. As a separate embodiment of the structure by which the movable cams 4 and the fixed cams 7 separate elastically, a tension coil spring 82 is used as the elastic member, as shown in Fig. 7. In this embodiment, the tension coil springs 82 are connected between the trailing surface 44 of the movable cams 4 and the regulating projections 9. The trailing surface 44 of the movable cams 4 and the regulating projections 9 are elastically pulled together by the tension coil springs 82, and configuration where the movable cams 4 elastically move away from the fixed cams 7 is formed.

Next, the operation of the present invention is explained. First, the contact portions 71 of the fixed cams 7 of the boss member B are normally in the non-contacting state due to the compression coil springs 81, so the fixed cams 7 of the boss member B and the movable cams 4 on the rear surface of the base half pulley A are elastically separated (see Figs. 5A, 5B, and 6A). Then when a sudden rotational acceleration is applied to the drive shaft due to an excessive rotational force, it is resisted by the elastic reaction force (load) of the compression coil springs 81, the compression coil springs 81 are shortened, and the contact portions 41 of the movable cams 4 and the contact portions 71 of the fixed cams 7 change from being in the separated non-contacting state to the contacting state (see Figs. 5C, 5D).

Further, if the sudden rotational acceleration continues, at the contact between the contact portions 71 of the fixed cams 7 and the contact portions 41 of the movable cams 4, the mutual compression force increases, and part of the compression force is converted from the rotational direction to the axial direction, so the movable cams 4 move (a slight movement) a small amount (slightly) in the axial direction relative to the fixed cams 7 (see Figs. 5E, 5F, and 6B). Then, accompanying the small movement (a slight movement) in the axial direction of the movable cams 4, the base half pulley A is moved a small (a slight movement) by the distance ΔL along the axial direction towards the movable half pulley 2 (which has the centrifugal rollers) (see Fig. 6C) . In this way, when there is sudden rotational acceleration, such as when suddenly starting or the like, the base half pulley A moves a small amount (a slight movement) by the distance ΔL towards the movable half pulley 2. Therefore a V-belt 10 is instantaneously held with a strong pressing force, so it is possible to prevent slippage between the V-belt 10, the base half pulley A, and movable half pulley 2.

Under normal conditions of rotational power, the base half pulley A can rotate and transmit the rotational power to the V-belt 10 with the movable cams 4 and the fixed cams 7 in the non-contacting state as a result of the elastic force of the compression coil springs 81 which acts to maintain the movable cams 4 of the base half pulley A and the fixed cams 7 of the boss member B in the non-contacting state. Therefore, the elastic force (load) of the compression coil springs 81 fitted between the fixed cams 7 of the boss member B and the movable cams 4 of the base half pulley A is set to be larger than the rotational force of the drive shaft 1 under normal conditions, and smaller than sudden rotational acceleration forces (rotational force under abnormal conditions (excessive rotational force)) such as when the accelerator is suddenly opened.

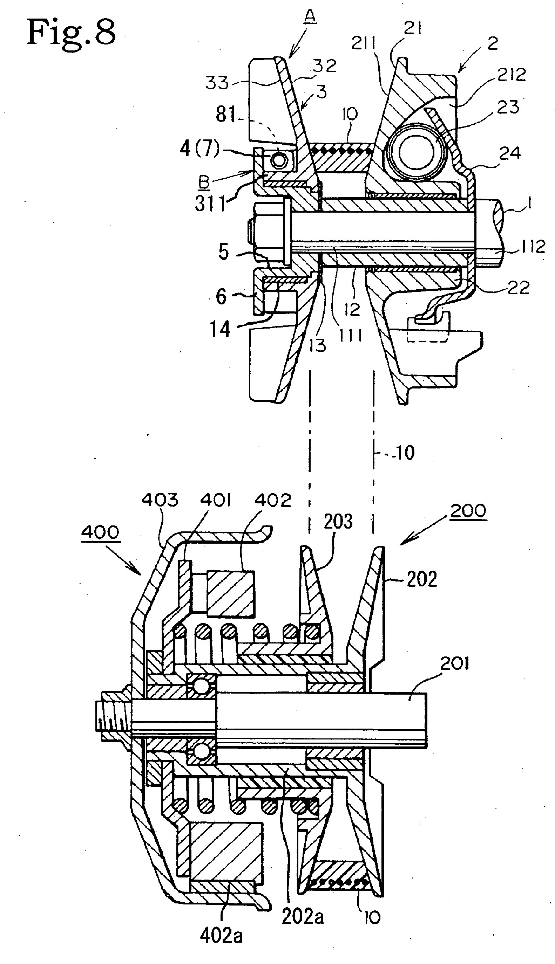

Fig. 8 shows an automatic transmission device that uses a drive pulley according to the present invention. The driven pulley 200 is a conventional commonly used pulley. The driven pulley that transmits the rotational power to the tires includes a fixed half pulley 202 and a movable half pulley 203 fitted to a driven shaft 201. The movable half pulley 203 is fitted so that it can freely slide on a cylindrical shaped boss portion 202a of the fixed half pulley 202. Also, the movable half pulley 203 is elastically pressed towards the fixed half pulley 202 by an elastic spring.

Also, the driven shaft 201 and the boss portion 202a can be connected by a centrifugal clutch 400. The centrifugal clutch 400 includes a clutch plate 401, clutch weights 402, and a clutch outer 403. The clutch weights 402 are pivotally connected to the clutch plate 401. As a result of centrifugal force, the clutch weights 402 together with a lining 402a fitted to the clutch weights 402 contact the inner peripheral surface of the clutch outer 403. In this way the centrifugal clutch 400 transmits the rotational power from the V-belt 10 to the driven shaft 201 via the fixed half pulley 202 and the movable half pulley 203, and so on.

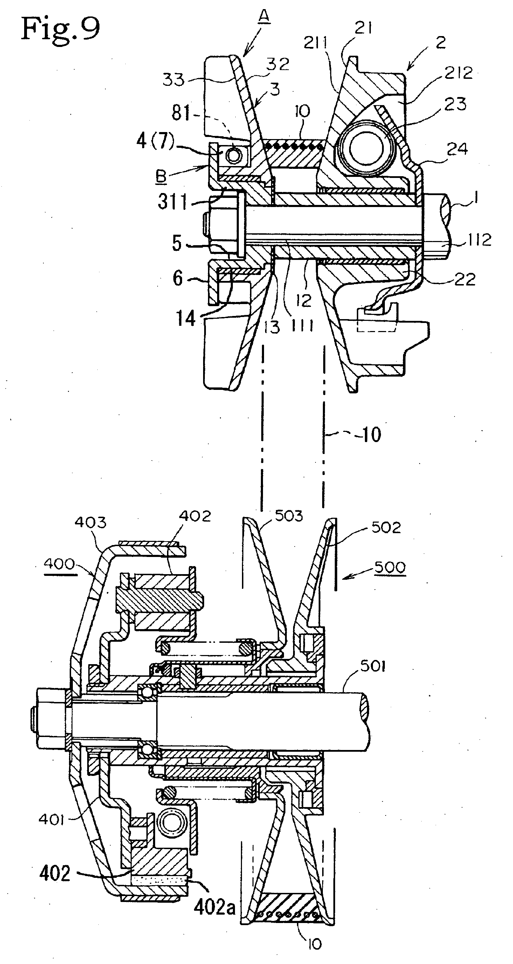

Also, Fig. 9 shows a driven pulley 500 in which both half pulleys can move similar to the drive pulley according to the present invention. Specifically, a non-fixed half pulley 502 can move a small distance (a slight movement) in the axial direction of a driven shaft 501. In the case of the driven pulley 500 provided with the non-fixed half pulley 502, when the drive pulley according to the present invention receives a sudden acceleration, the non-fixed half pulley 502 of the driven pulley 500 can move (a slight movement) a small amount corresponding to the operation of the drive pulley according to the present invention.

When the non-fixed half pulley 502 responds to a sudden rotational acceleration via the V-belt 10, the non-fixed half pulley 502 can move (a slight movement) a small amount towards the movable half pulley 503. For example, corresponding to the operation of the drive pulley according to the present invention in a sudden rotational acceleration, such as when suddenly starting or the like, the V-belt 10 can be instantaneously pressed by the non-fixed half pulley 502 and the movable half pulley 503. In this way, it is difficult for slippage to occur between the V-belt 10, the non-fixed half pulley 502, and the movable half pulley 503. By using this driven pulley 500 and the drive pulley according to the present invention, it is possible to achieve an automatic transmission with excellent response to suddenly applied rotational accelerations, such as when suddenly starting or the like.

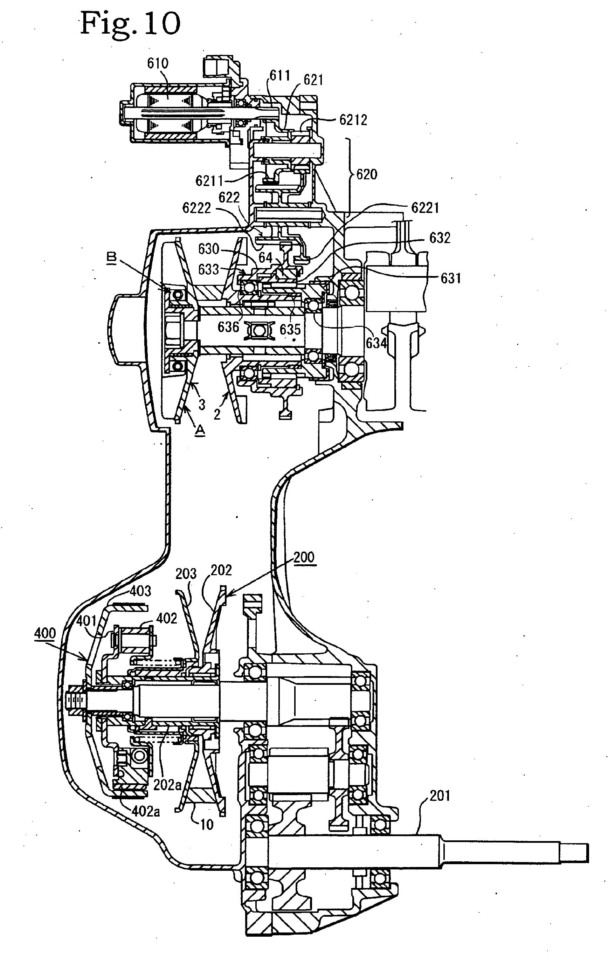

Next, it is possible to incorporate into the drive pulley an embodiment in which the movable half pulley 2 is moved in the axial direction during a speed change operation by a motor 610, a gear mechanism 620, and a sliding mechanism 630, as shown in Fig. 10. In this mechanism, the movable half pulley 2 is controlled by the motor 610 to move closer to or away from the base half pulley A, so the V-belt automatic transmission carries out speed change as appropriate in accordance with the road or running conditions.

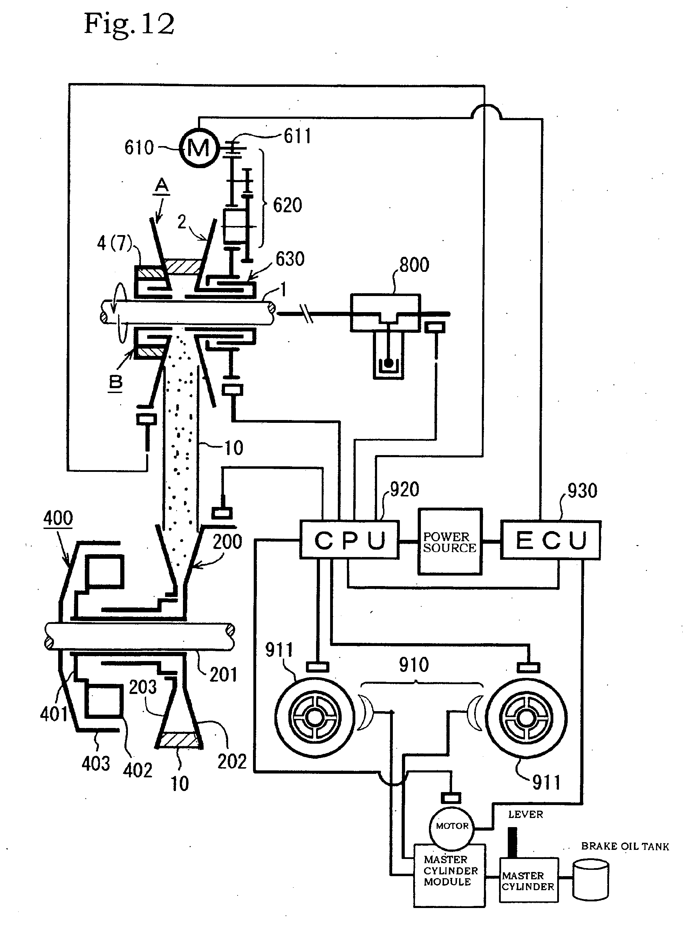

As shown in Fig. 12, control of the operation of the motor 610 is carried out by ABS (anti-skip or anti-lock brakes) 910, a central processing unit (CPU) 920, and an operation command unit (ECU) 930. First, information on the road conditions obtained by the ABS 910 is checked by the CPU 920. Based on this information an operation command is issued by the CPU 920 to the ECU 930 in accordance with the road conditions. Then the motor 610 is started, and the movable half pulley 2 is moved by the motor control, so the automatic transmission device (CVT) can carry out appropriate speed change operations.

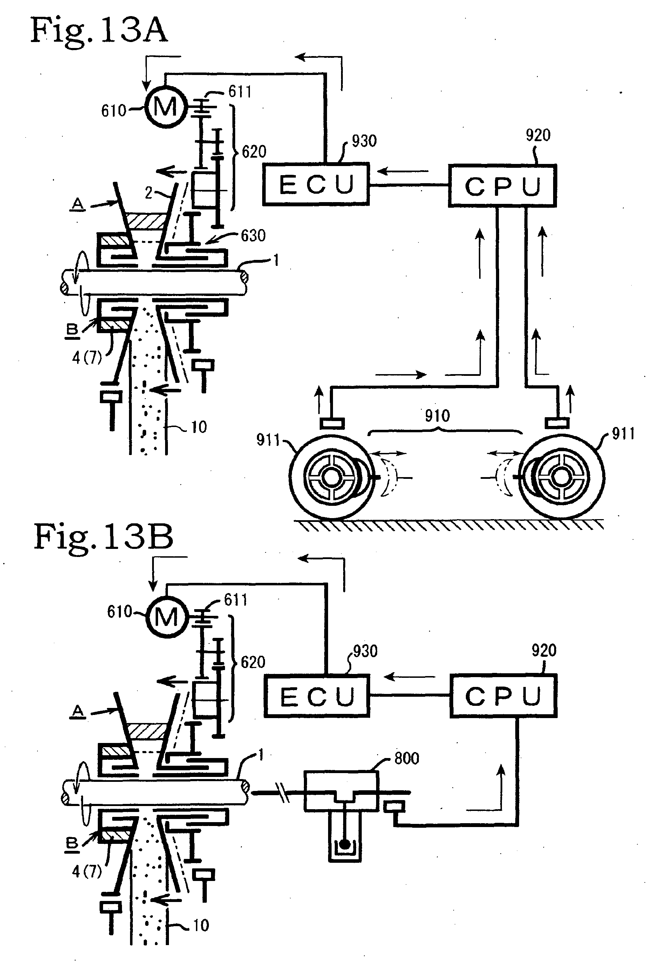

As for ABS 910, assuming the coefficient of friction with the road during running is µ, wheels 911 send information on the coefficient of friction µ from the ABS 910 to the CPU 920 (see Fig. 13A). In the case of a road surface with a small coefficient of friction µ, in other words a road surface on which it is easy to slip, the CPU 920 appropriately reduces the speed reduction ratio via the ECU 930 and the motor 610, so that the speed reduction ratio is small.

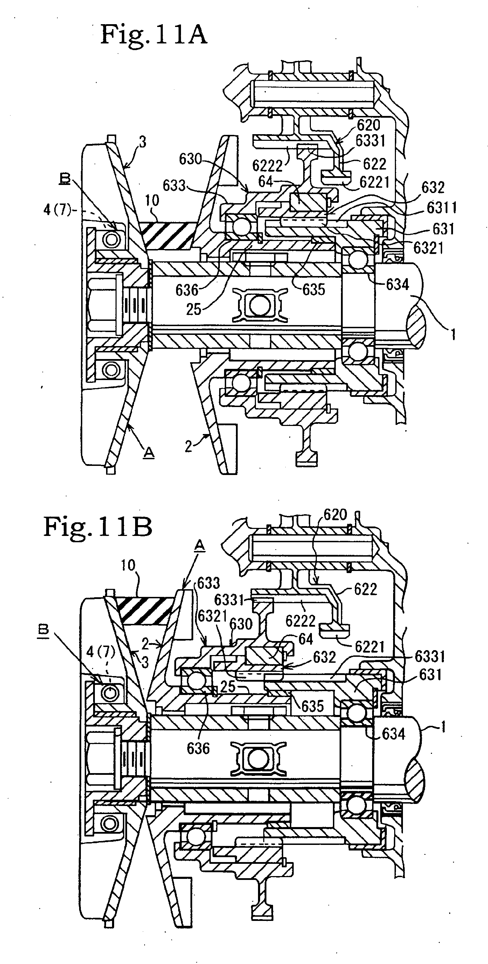

As shown in Figs. 10, 11A, and 11B, the sliding mechanism 630 includes a male screw cylindrical shaped member 631, a female screw cylindrical shaped member 632, and an operating gear member 633. The male screw cylindrical shaped member 631 can freely rotate in the circumferential direction of the drive shaft 1 about the drive shaft 1 via a first bearing 634, and is fixed with respect to the axial direction of the drive shaft 1. Furthermore, a movable boss portion 25 of the movable half pulley 2 is inserted into the inner periphery of the male screw cylindrical shaped member 631. A second bearing 635 is fitted between the male screw cylindrical shaped member 631 and the movable boss portion 25 to permit sliding, so that the movable half pulley 2 can freely slide in the axial direction with respect to the male screw cylindrical shaped member 631. An external threaded portion 6311 is formed on the male screw cylindrical shaped member 631, and an internal threaded portion 6321 is formed on the female screw cylindrical shaped member 632. The male screw cylindrical shaped member 6311 and the female screw cylindrical shaped member 6321 are screwed together, so the male screw cylindrical shaped member 631 can move along the axial direction relative to the female screw cylindrical shaped member 632.

The operation gear member 633 is supported by a third bearing 636 on the movable boss portion 25 of the movable half pulley 2 so that the operation gear member 633 can freely rotate in the circumferential direction of the movable boss portion 25. Also, the female screw cylindrical shaped member 632 is housed within the inner periphery of the operation gear member 633. The operation gear member 633 and the female screw cylindrical shaped member 632 are fit (or engaged with) and connected together by fixing means 64, such as a spline structure (or a fastener such as a key) or the like (see Figs. 11A and 11B). The operation gear member 633 and the female screw cylindrical shaped member 632 are fixed in both the circumferential direction and the axial direction. In other words, the operation gear member 633 and the female screw cylindrical shaped member 632 are made into an integral structure by the fixing means 64. A sliding gear portion 6331 is formed on the outer periphery of the operation gear member 633. The sliding gear portion 6331 can freely slide in the axial direction while meshing with a second gear 622 of the gear mechanism 620, which is described later.

The gear mechanism 620 includes a first gear 621 and the second gear 622; the first gear 621 includes a large diameter gear 6211 and a small diameter gear 6212. The large diameter gear 6211 meshes with a motor gear 611 of the motor 610, and transmits rotation from the motor 610. The small diameter gear 6212 transmits the rotation from the motor 610 to the second gear 622. The second gear 622 is formed from a transmission gear 6221 and a sliding gear 6222. Rotation is transmitted from the small diameter gear 6212 of the first gear 621 to the transmission gear 6221. The sliding gear 6222 meshes with the sliding gear portion 6331 of the operation gear member 633.

As a result of the configuration described above, the female screw cylindrical shaped member 632 and the operation gear member 633 rotate together. The rotational drive power of the motor 610 is transmitted to the male screw cylindrical shaped member 631, which is fixed so that it can freely rotate about the drive shaft 1, via the gear mechanism 620. The operation gear member 633 and the female screw cylindrical shaped member 632 move in the axial direction of the drive shaft 1 while rotating together, and move the movable half pulley 2 and the base half pulley A closer or further apart.

The first bearing 634 is provided between the male screw cylindrical shaped member 631 and the drive shaft 1, so the rotation of the drive shaft 1 is not transmitted to the male screw cylindrical shaped member 631. Also, the third bearing 636 is provided between the movable half pulley 2 and the operation gear member 633, so the rotation of the operation gear member 633 and the female screw cylindrical shaped member 632 is not transmitted to the movable half pulley 2, and the rotation of the movable half pulley 2 is not transmitted to the operation gear member 633 and the female screw cylindrical shaped member 632.

Next, the control by the CVT control device is explained. First, a system provided with the ABS 910 is explained, as shown in Fig. 13A. When the brake is operated, the ABS 910 checks the condition of the road surface, and if the CPU 920 determines from the signal that the road surface has a small coefficient of friction µ, a command is transmitted from the CPU 920 to the ECU 930 to change the speed change ratio of the CVT. Then the ECU 930 moves the movable half pulley 2 in the axial direction, via the motor 610, the gear mechanism 620, and the sliding mechanism 630, to set the speed change ratio to a suitable value in accordance with the coefficient of friction µ of the road surface. For example, on a slippery road surface, the coefficient of friction µ is small, so the gripping force between the tires and the road surface is small. Therefore, the drive torque of the engine 800 should be reduced during running. Reducing the drive torque can be achieved by reducing the speed change ratio of the CVT. In these specific circumstances, when starting on a snowy road, starting in a low gear is avoided, and starting is nearer to starting in second gear.

Also, the following is an embodiment for the case where the system does not include the ABS 910 as described above, as shown in Fig. 13B. In this case, information on the change of rotation (signal) of the engine 800 and the amount of throttle (signal) are provided to the controlling ECU 930, and the amount of movement of the movable half pulley 2 is controlled by the motor 610. In this embodiment, information from the engine 800 is evaluated by the CPU 920, and the motor 610 is controlled via the ECU 930 to move the movable half pulley 2 of the drive pulley to change the speed. In other words, The CVT control device reduces or increases the rotational power of the motor 610 in a reduction gear, and the movable half pulley 2 is moved by the gear mechanism 620 to operate the speed change. In this embodiment, if rotational power is suddenly generated by the engine 800, the movable half pulley 2 is operated by the sliding force of the motor 610 and the gear mechanism 620, via the CPU 920 and the ECU 930, and the base half pulley A is operated by the cam force, so that belt slip is prevented. This speed change operation is carried out while monitoring the rotational speed change of the engine 800, and the change in output of the engine 800.

If the amount of throttle (throttle opening) of the engine 800 is increased at once (the intake valve of the throttle body is fully opened), the amount of air and fuel increases, and the engine 800 output also suddenly increases. When the output is transmitted from the drive shaft 1 to the drive pulley, and transmitted as drive power to the V-belt 10, the CVT control device operates the motor 610 and reduction gear in accordance with the state of rotation of the engine 800. The movable half pulley 2 is instantaneously moved, and the cams of the base half pulley A are operated, so the belt 10 is held while the speed change is carried out, so it is possible to prevent slipping of the belt 10 when sudden rotational power is generated.

## Claims

1. A drive pulley in a V-belt automatic transmission device, comprising:
a drive shaft (1);
a movable half pulley (2) that rotates together with the drive shaft (1) and moves in the axial direction;
a base half pulley (A) that is in opposition to the movable half pulley and includes a base pulley face (3) whereby in the base pulley face (3) a flat conical shaped surfact portion is a front surface (32) and the surface to the rear of the front surface (32) is a rear surface (33) and movable cams (4) are formed on said rear surface (33) and around a hole portion (31) of the base half pulley; and
a boss member (B) which is fixed to the drive shaft (1), and which includes a boss shaft portion (5) which slidably supports the base half pulley (A), and fixed cams (7) formed around the boss shaft portion, wherein
when a sudden rotational acceleration is applied to the drive shaft, the fixed cams (7) contact the movable cams (4), and the movable cams move away from the fixed cams in the axial direction, **characterized in that** the hole portion is a boss hole portion (31), and **in that** the boss shaft portion (5) is inserted into the boss hole portion (31).

2. A drive pulley according to claim 1, wherein
the movable cams (4) and the fixed cams (7) can be brought into contact, but under normal conditions the movable cams and the fixed cams are elastically separated, and cam surfaces are formed at the positions of contact of the movable cams (4) and the fixed cams (7) such that the movable cams move away from the fixed cams in the axial direction of the drive shaft (1) accompanied by a movement of the fixed cams in the direction of rotation of the drive shaft.

3. The drive pulley in a V-belt automatic transmission device according to claim 1 or claim 2, wherein the contact portions of the movable cams (4) and the fixed cams (7) are slanting surfaces in plane contact.

4. The drive pulley in a V-belt automatic transmission device according to claim 1 or claim 2, wherein compression coil springs (81) are fitted as elastic members between the two contact portions of the movable cams (4) and the fixed cams (7), depression portions (75) are formed in the movable cams and the fixed cams from the two contact portions towards the interior thereof, and the two end portions in the longitudinal direction of the compression coil springs (81) are housed in the depression portions.

5. The drive pulley in a V-belt automatic transmission device according to claim 1 or claim 2, wherein regulating projections are formed at appropriate intervals on the side of the contact portions of the fixed cams of the boss member.

6. The drive pulley in a V-belt automatic transmission device according to claim 1 or claim 2, wherein a plurality of the movable cams (4) are formed at equal intervals along the circumferential direction around the periphery of the boss hole portion (31), and the number of fixed cams (7) is the same as the number of movable cams (4), and the fixed cams (7) are formed at the same intervals as the movable cams (4).

## Patentansprüche

1. Antriebsscheibe in einem automatischen Keilriemen-Getriebe, die Folgendes umfasst:
eine Antriebswelle (1),
eine bewegliche halbe Scheibe (2), die sich zusammen mit der Antriebswelle (1) dreht und sich in der axialen Richtung bewegt,
eine halbe Basisscheibe (A), die der beweglichen halben Scheibe gegenübersteht und eine Basisscheibenfläche (3) einschließt, wobei in der Basisscheibenfläche (3) ein flacher konisch geformter Oberflächenabschnitt eine vordere Fläche (32) ist und die Fläche zur Rückseite der vorderen Fläche (32) eine hintere Fläche (33) ist und bewegliche Nocken (4) auf der hinteren Fläche (33) und um einen Lochabschnitt (31) der halben Basisscheibe geformt sind, und
ein Nabenelement (B), das an der Antriebswelle (1) befestigt ist und das einen Nabenwellenabschnitt (5), der die halbe Basisscheibe (A) verschiebbar trägt, und feststehende Nocken (7), die um den Nabenwellenabschnitt geformt sind, einschließt, wobei
wenn eine plötzliche Drehbeschleunigung auf die Antriebswelle ausgeübt wird, die feststehenden Nocken (7) die beweglichen Nocken (4) berühren und sich die beweglichen Nocken in der axialen Richtung weg von den feststehenden Nocken bewegen, **dadurch gekennzeichnet, dass** der Lochabschnitt ein Nabenlochabschnitt (31) ist und dass der Nabenwellenabschnitt (5) in den Nabenlochabschnitt (31) eingesetzt ist.

2. Antriebsscheibe nach Anspruch 1, wobei
die beweglichen Nocken (4) und die feststehenden Nocken (7) in Berührung gebracht werden können aber unter normalen Bedingungen die beweglichen Nocken und die feststehenden Nocken elastisch getrennt werden, und Nockenflächen an den Positionen der Berührung der beweglichen Nocken (4) und der feststehenden Nocken (7) geformt sind derart, dass sich die beweglichen Nocken in der axialen Richtung der Antriebswelle (1) weg von den feststehenden Nocken bewegen, begleitet von einer Bewegung der feststehenden Nocken in der Drehrichtung der Antriebswelle.

3. Antriebsscheibe in einem automatischen Keilriemen-Getriebe nach Anspruch 1 oder Anspruch 2, wobei die Berührungsabschnitte der beweglichen Nocken (4) und der feststehenden Nocken (7) schräge Flächen in einer Flächenberührung sind.

4. Antriebsscheibe in einem automatischen Keilriemen-Getriebe nach Anspruch 1 oder Anspruch 2, wobei Druckschraubenfedern (81) als elastische Elemente zwischen den zwei Berührungsabschnitten der beweglichen Nocken (4) und der feststehenden Nocken (7) angebracht sind, Vertiefungsabschnitte (75) in den beweglichen Nocken und den feststehenden Nocken von den zwei Berührungsabschnitten zum Inneren derselben hin geformt sind und die zwei Endabschnitte in der Längsrichtung der Druckschraubenfedern (81) in den Vertiefungsabschnitten untergebracht sind.

5. Antriebsscheibe in einem automatischen Keilriemen-Getriebe nach Anspruch 1 oder Anspruch 2, wobei Regulierungsvorsprünge in angemessenen Abständen auf der Seite der Berührungsabschnitte der feststehenden Nocken des Nabenelements geformt sind.

6. Antriebsscheibe in einem automatischen Keilriemen-Getriebe nach Anspruch 1 oder Anspruch 2, wobei mehrere der beweglichen Nocken (4) in gleichen Abständen längs der Umfangsrichtung um den Umfang des Nabenlochabschnitts (31) geformt sind und die Zahl der feststehenden Nocken (7) die gleiche ist wie die Zahl der beweglichen Nocken (4) und die feststehenden Nocken (7) in den gleichen Abständen geformt sind wie die beweglichen Nocken (4).

## Revendications

1. Poulie d'entraînement dans un dispositif de transmission automatique par courroie trapézoïdale, comportant :
un arbre d'entraînement (1);
une demi-poulie mobile (2) qui tourne avec l'arbre d'entraînement (1) et se déplace dans le sens axial ;
une demi-poulie de base (A) qui est en opposition à la demi-poulie mobile et comprend une face de poulie de base (3), dans laquelle dans la face de poulie de base (3) une portion de surface de forme conique plate est une surface avant (32) et la surface à l'arrière de la surface avant (32) est une surface arrière (33) et des cames (4) mobiles sont formées sur ladite surface arrière (33) et autour d'une portion d'orifice (31) de la demi-poulie de base ; et
un organe de bossage (B) qui est fixé à l'arbre d'entraînement (1), et qui comprend une portion (5) d'arbre de bossage qui supporte de manière coulissante la demi-poulie de base (A), et des cames (7) fixes formées autour de la portion d'arbre de bossage, dans laquelle
lorsqu'une accélération rotationnelle soudaine est appliquée sur l'arbre d'entraînement, les cames (7) fixes viennent en contact avec les cames (4) mobiles, et les cames mobiles s'éloignent des cames fixes dans le sens axial, **caractérisée en ce que** la portion d'orifice est une portion (31) d'orifice du bossage, et **en ce que** la portion (5) d'arbre de bossage est insérée dans la portion (31) d'orifice du bossage.

2. Poulie d'entraînement selon la revendication 1, dans laquelle
les cames (4) mobiles et les cames (7) fixes peuvent être amenées à venir en contact les unes avec les autres, mais dans des conditions normales, les cames mobiles et les cames fixes sont séparées de manière élastique, et des surfaces de cames sont formées aux emplacements de contact des cames (4) mobiles et des cames (7) fixes de sorte que les cames mobiles s'éloignent des cames fixes dans le sens axial de l'arbre d'entraînement (1) accompagnées d'un déplacement des cames fixes dans le sens de rotation de l'arbre d'entraînement.

3. Poulie d'entraînement dans un dispositif de transmission automatique par courroie trapézoïdale selon la revendication 1 ou la revendication 2, dans laquelle les portions de contact des cames (4) mobiles et des cames (7) fixes sont des surfaces inclinées dont le contact est plan.

4. Poulie d'entraînement dans un dispositif de transmission automatique par courroie trapézoïdale selon la revendication 1 ou la revendication 2, dans laquelle des ressorts (81) de compression hélicoïdaux sont montés sous forme d'organes élastiques entre les deux portions de contact des cames (4) mobiles et des cames (7) fixes, des portions (75) de dépression sont formées dans les cames mobiles et les cames fixes depuis les deux portions de contact vers l'intérieur de celles-ci, et les deux portions d'extrémité dans le sens longitudinal des ressorts (81) de compression hélicoïdaux sont logées dans les portions de dépression.

5. Poulie d'entraînement dans un dispositif de transmission automatique par courroie trapézoïdale selon la revendication 1 ou la revendication 2, dans laquelle des saillies régulatrices sont formées à des intervalles appropriés du côté des portions de contact des cames fixes de l'organe de bossage.

6. Poulie d'entraînement dans un dispositif de transmission automatique par courroie trapézoïdale selon la revendication 1 ou la revendication 2, dans laquelle plusieurs des cames (4) mobiles sont formées à des intervalles égaux dans le sens circonférentiel autour de la périphérie de la portion (31) d'orifice du bossage, et le nombre de cames (7) fixes est le même que le nombre de cames (4) mobiles, et les cames (7) fixes sont formées aux mêmes intervalles que les cames (4) mobiles.
